# EUROPEAN PATENT SPECIFICATION

(11) **EP 0 488 760 B1**
(45) Date of publication and mention of the grant of the patent: **14.08.1996**
(21) Application number: 91311074.8
(22) Date of filing: 29.11.1991
(51) Int. Cl.: G11B 15/18, G11B 15/675

(54) **Cartridge tape drive**
Kassettenbandantriebsvorrichtung
Dispositif d'entraînement de bande de cassette

(30) Priority: 30.11.1990 US 621364
(43) Date of publication of application: 03.06.1992
(73) Proprietor: Conner Peripherals, Inc., San José California 95134-22128 (US)
(72) Inventor: Henke, Steven E., Canton, Michigan 48187 (US); Linn, Kevin A., Pinckney, Michigan 48169 (US)
(74) Representative: Maggs, Michael Norman

(56) References cited:
- EP-A- 0 171 130
- WO-A-82/03939
- GB-A- 2 164 782
- US-A- 4 608 615
- US-A- 4 625 248
- US-A- 4 796 120
- US-A- 4 858 047

## Description

This invention relates to tape drives (e.g., magnetic tape recorder/reproducer devices), particularly those which utilize recording tape which is permanently housed in cartridges and are adapted for digital data storage, having the capability of recording high-density data transitions along a plurality of closely-spaced tracks. More particularly still, the invention relates to a tape drive of the aforementioned character having a novel and advantageous physical design and arrangement of parts and components which enables the overall device to have extremely small and compact dimensions, and in particular to have very low height or thickness (i.e., "profile"), whereby the resulting drive is highly advantageous for use in personal or other such small computers of extremely small size, for example those known as "lap top" models.

Many different types of tape drives have been developed and used heretofore in the computer field for data-storage purposes. Generally speaking, the tendency has been for ever-increasing data storage capacities and ever-smaller physical sizes. As a result, earlier such devices which utilized comparably wide tape mounted in reel-to-reel configuration have found only limited application and subsequent developments have lead to much more compact tape drives utilizing interchangeable tape cartridges. Such drives have gradually decreased in size and become more compact as a result of developments in componentry and advances, in physical packaging or component designs over the course of time, and this trend has been hastened, and facilitated, by the corresponding development and availability of small and compact tape cartridges containing tape as narrow as about one-eigth inch in width (e.g., the now-popular and widely-utilized cartridges manufactured by or under licence from Minnesota Mining and Manufacturing Company, and identified as "DC 1,000", "DC 2,000", etc.).

In the foregoing regard, reference is made to US-A-4,647,994, disclosing a highly successful and widely-used data storage tape drive of small overall size as a result of having a highly compact "architecture" or internal design configuration, i.e. arrangement of parts and components, while at the same time providing superior operating capabilities such as closed-loop servo-tracking and head-positioning. Notwithstanding these favourable attributes, however, this previous-developed tape drive possessed at least certain seemingly inherent size limitations of its own, even though it was readily implemented in a size sufficiently small to fit into the standard "half-high" or "mini-floppy" disk drive space. Nonetheless, this required a minimum thickness or height of about 4.4 cm (1.75 inches), at least when assembled by use of standard or readily available componentry such as motors and the like, as is most desirable from the standpoint of manufacturing economies. Accordingly, while providing remarkable performance capabilities in a device of very small physical size, this previously-developed tape drive now appears larger, or at least thicker, than what would be more ideally suited for other applications such as the extremely small and compact "lap top" and other such small computers now coming into increasingly widespread usage. GB-A-2164782 shows a tape drive according to the precharacterising portion of claim 1. The head positioning motor is perpendicular to the plane of the tape cartridge when inserted and the minimum height of the tape drive is thereby increased. US 4,608,615 and US 4,796,120 also disclose a head positioning motor perpendicular to the plane of the tape cartridge when inserted, US 4,796,120 additionally having a complex gear linkage between this motor and an azimuth adjusting lever.

Accordingly, the need exists for a new form of cartridge-type tape drive having a different and more compact physical configuration and componentry which provides for an extremely small overall size which is of particularly and markedly thin or narrow size, and which at the same time provides for enhanced and desirable operational characteristics and reliability.

According to the present invention there is provided a tape drive having the features recited in the characterising portion of claim 1.

The novel tape drive configuration in accordance with the present invention makes it possible to provide a highly reliable digital data storage device of the tape cartridge drive type which in a typical configuration is on the order of only about (2.5 cm (1.0 inches) in thickness, and which furthermore provides the immediate capability of an even smaller configuration, where necessary or desirable, which is on the order of only about 1.9 cm (0.75 inches) in thickness, with outer dimensions generally corresponding to those of the aforementioned previously-developed configuration of US-A-4,647,994, i.e., on the order of about 10.16 cm (4.0 inches) wide by 14.50 cm (5.75 inches) long.

In addition, particular aspects of the novel and advantageous tape drive configuration provided hereby include new and improved tape cartridge-loading and locking apparatus which provide highly desirable operational characteristics, user facility, and reliable positioning, together with other features including novel and advantageous tape-driving componentry, tape head-positioning apparatus highly suitable to precise and reliable control while additionally providing a high degree of operational stability, as well as novel and advantageous head-indexing and edge-of-tape control means, cartridge-presence and write-protect apparatus, EOT/BOT detection apparatus, and other features.

More particularly stated, the present invention provides a cartridge tape drive of novel internal design configuration and componentry, including spring-biased cartridge loading, positioning, and unloading cam apparatus, together with novel cartridge-referencing means, tape-driving capstan apparatus, transducer head-positioning means, edge-of-tape sensing and control means, and other features disclosed more particularly hereinafter.

In its most preferred form, the tape-drive apparatus contemplated hereby includes a belt-driven capstan assembly of novel configuration mounted for pivotal movement to facilitate cartridge loading and unloading while maintaining belt drive length in a substantially continuous manner and without undue belt elasticity and stretching. In a further preferred form, the novel head-positioning apparatus provided hereby includes a worm-gear drive of novel configuration and disposition, incorporating mechanically intercoupled lead screw positioning driven directly from the motor-driven worm-gear assembly.

Numerous other particular features, together with other objectives and advantages of the invention, will become more apparent following detailed consideration of the ensuing specification setting forth preferred embodiments of the invention, particularly when considered in conjunction with the appended drawings illustrating such embodiments.
Fig. 1 is an enlarged, overhead plan view showing the overall tape drive configuration along with an exemplary tape cartridge installed in position for operation;
Fig. 2 is a further enlarged, fragmentary overhead plan view of a portion of the structure shown in Fig. 1, further illustrating certain structure as well as engagement and disengagement of the cartridge;
Fig. 3 is an enlarged front elevational view of the structure shown in Fig. 1;
Fig. 4 is a side elevational view of the structure shown in Fig. 3;
Fig. 5 is an enlarged fragmentary frontal perspective view further illustrating particular components of the structure shown in the preceding figures;
Fig. 6 is a further enlarged, fragmentary perspective view showing the head-positioning mechanism;
Fig. 7 is a still further enlarged fragmentary side elevational view of the structure shown in Fig. 6;
Fig. 8 is an enlarged fragmentary frontal perspective view showing the tape-drive capstan assembly;
Fig. 9 is an enlarged fragmentary overhead plan view showing one of the cartridge loading and locking cam mechanisms in relation to a cartridge;
Fig. 10 is a fragmentary perspective view of the cartridge loading and locking mechanism shown in Fig. 9;
Fig. 11 is an enlarged, fragmentary overhead plan view showing preferred embodiments of certain tape and cartridge sensing and control elements of the drive; and
Fig. 12 is a further enlarged fragmentary sectional side elevational view taken along the plane XII - XII of Fig. 11 and viewed in the direction of the arrows.

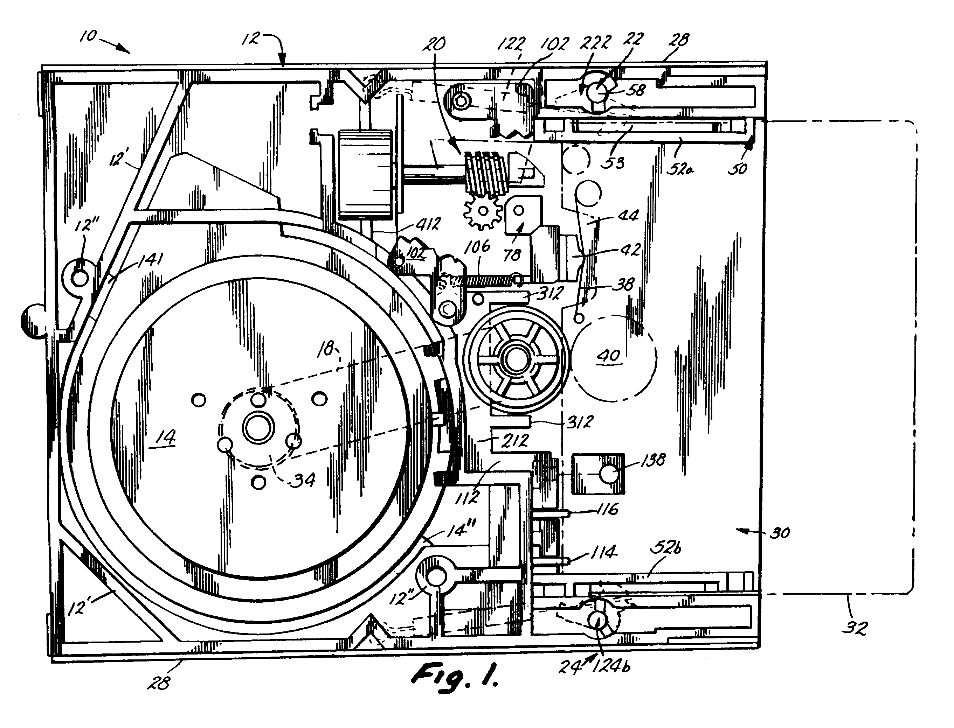

Referring now in more detail to the drawings, it is first to be noted that the small overall size of the actual tape drive product which may be made in accordance with the present invention is exemplified by the fact that the scale of the various figures is approximately twice that of the drive itself, the drawings having been enlarged to more readily illustrate their structural features. With particular reference to Figs. 1, 3 and 4, the overall structure of the tape drive 10 generally comprises a rigid peripheral support frame, or main frame, 12 which carries a series of primary operational components or component groupings such as a tape-driving motor 14 coupled to a tape drive capstan assembly 16 by a drive belt 18, a transducer head-positioning mechanism 20, and oppositely-disposed cartridge-loading and locking cam mechanisms 22 and 24.

The frame 12, which is otherwise open at the top and bottom, is closed at the bottom by a main printed circuit board 26, which essentially mounts and carries all of the electronic and/or electrical components required by the drive. Circuit board 26 may by secured to the frame 12 along each opposite side by a rigid elongated L-shaped bracket 28 extending along substantially the full length of the frame. In a preferred embodiment, the brackets 28 comprise integral portions of a single one-piece mounting bracket which extends completely across frame 12 from side to side, below PC board 26, by which additonal overall rigidity is obtained. In either event, PC board 26 is preferably isolated from twisting or other such stresses imposed on frame 12 but held firmly in predetermined position therebelow, for purposes explained in more detail hereinafter. As illustrated, the frontal area of the drive 10 defines an opening for receiving the tape cartridge 30, preferably in the general manner and position illustrated in Fig. 1, wherein a sizeable portion 32 of the cartridge protrudes outwardly beyond the frontal margins of frame 12. As further illustrated in Fig. 1, the frame 12 preferably includes a plurality of internal braces and walls 12′ which serve structually-rigidifying purposes as well as defining mounting and supporting structures for the various internal components mentioned above, as described hereinafter in more detail.

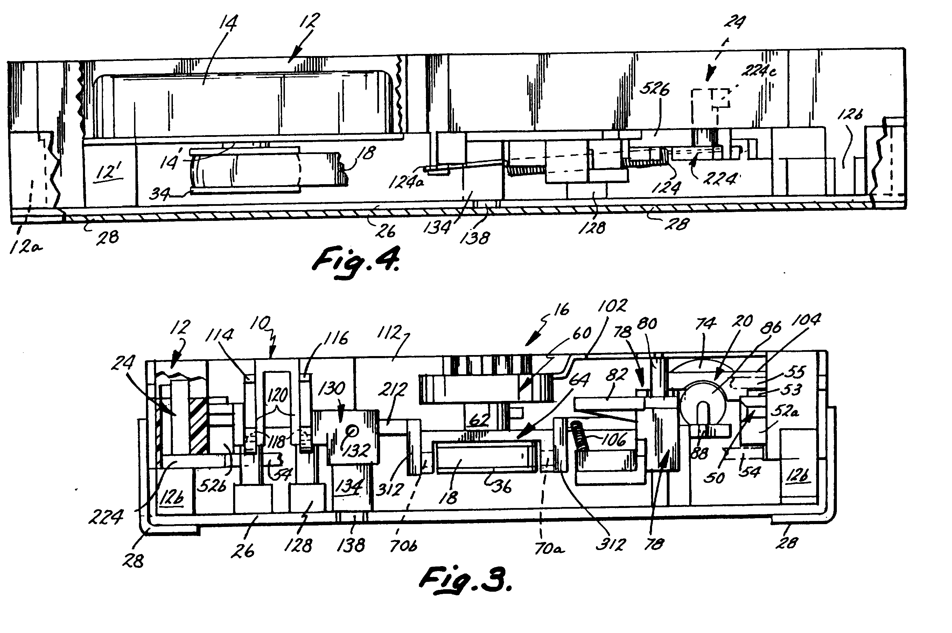

As illustrated in Fig. 1, the tape-drive motor 14 occupies a substantial portion of the internal space within support frame 12 (which in the preferred embodiment under discussion measures approximately 9.9 by 12.7 cm (3.9 by 5.0 inches) on the outside), requiring most of the rear portion of the interior. In the particular preferred embodiment under discussion the motor 14 (which is illustrated in relative scale in the drawings) has a diameter of about 6.81 cm (2.68 inches), which is approximately 60% of the internal width of frame 12. While motors of various other diameters may well be used in other embodiments of the invention, it should be appreciated that where the overall height of the drive is merely on the order of about 1.9 to 2.5 cm (0.75 to 1.0 inch), the thickness or height of the main tape drive motor is of considerable importance; thus, in the preferred embodiment shown (e.g., Figs. 3 and 4), the body of motor 14 is only about 1.27 cm (0.50 inches high), and indeed the total height of the motor 14, including its output shaft 14' and output drive pulley 34, is less than 1.9 cm (0.75 inches). Since motor torque and speed capabilities are directly related to physical size (and bearing in mind such realities as manufacturing economy and ambient magnetic field limitations) it will be appreciated that the realization of proper physical dimensions for motor 14 is in fact of the essence to the realization, and achievement, of a commercially-viable and reliable tape drive having the limited size noted above and yet suitable for the demanding requirements of modern digital data storage applications.

As illustrated in Fig. 1, the tape-drive motor 14 may be supported in place upon hub-like mounts 12" defined by the internal bridging walls 12' of frame 12, using mounting flanges 14" which comprise part of, or are secured to, the motor housing, with the body portion of the motor located nearest the viewer as shown in Fig. 1 and the motor drive shaft 14' projecting in the opposite direction (Fig. 4). The drive pulley 34 is secured to motor drive shaft 14′ at a position placing it in lateral alignment with a driven pulley 36 (Fig. 3) associated with the capstan assembly 16. One end of the drive belt 18 is entrained around pulley 34, and belt 18 extends forwardly toward, and wraps around, pulley 36 of capstan assembly 16.

An interior wall 112 (Fig. 1) extends forwardly and across frame 12, curving around motor 14 and in effect dividing the area occupied by motor 14 from the frontal area occupied by the tape drive capstan 16 and head-positioner 20, etc. As noted further hereinafter, interior wall 112 has a forwardly-projecting portion 212 upon or against portions of which various components are mounted, as described further hereinafter. The elongated side portions of frame 12 inside the frontal opening which receives the cartridge 30 define guiding and support structure for the cartridge, as well as providing mounting structure for the cartridge-loading and locking cams 22, 24 and their elongated operating springs 122, 124, respectively (also discussed in more detail hereinafter).

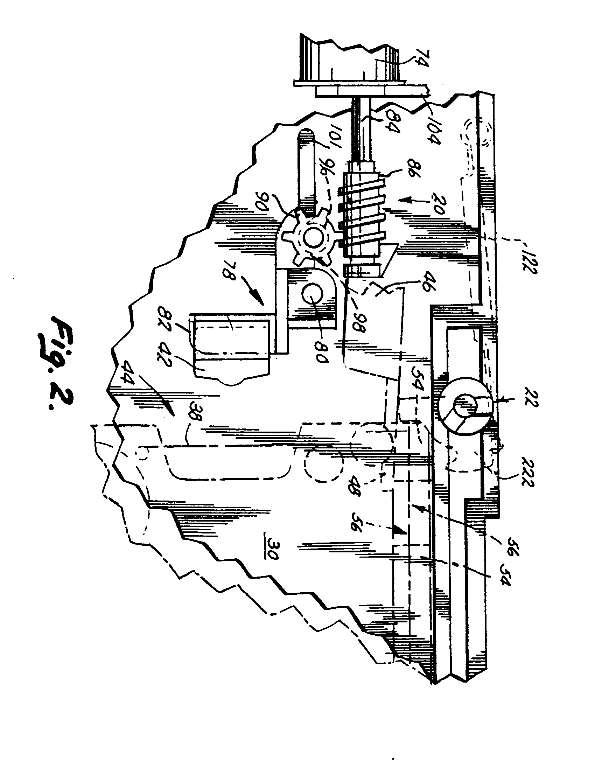

As is well known by those familiar with digital data-storage tape cartridges, the particular cartridge 30 identified above is of generally rectangular shape and measures approximately 8.1 cm (3.2 inches) wide by 6.1 cm (2.4 inches) deep (front to back), and is approximately (1.47 cm (0.58 inches) high, or thick. Such cartridge has a quantity of recording tape 38 (Figs. 1 and 2) permanently enclosed within it that is transported from one to another of a pair of internal supply and takeup reels (not shown) upon rotation of an externally-accessible disk-like drive roller 40, which is intended to be engaged and driven by an appropriate capstan or other such drive roller that accesses the tape drive roller 40 through an opening provided in the front wall of the cartridge. The tape 38 is accessed by the recording transducer or head 42 through an opening 44 in the front of the cartridge which is normally covered by a protective door 46 when the cartridge is not mounted in a tape drive for use. As is well known, the door 46 pivots forwardly to reveal the head opening 44, and this is typically accomplished by providing an appropriately-located pin or other such protrusion in a position along the loading path to engage an operating handle portion 48 of door 46 as the cartridge is inserted into the drive to load it for operation.

In accordance with the present embodiments, the tape access door 46 is opened by the end extremity 50 (Figs. 1 and 3) of a longitudinally-extending rib 52a defined by frame 12, along which a recess in the side edge of the cartridge 30 slides during cartridge insertion, the opposite (left, as seen in Figs. 1 and 3) side of the frame 12 having a similar and complementary longitudinal rib 52b which receives a recess extending along that corresponding side of the cartridge. That is, each side of the cartridge 30 has a projecting top and bottom flange portion 55 and 54 respectively (Fig. 3), which define between them an elongated recess of generally rectangular cross-section complementary to that of the ribs 52a, 52b. Thus, as the cartridge is inserted into the drive 10 for use, by sliding its edge recesses along ribs 52a and 52b, the door 46 is automatically opened and pivoted into a forwardly-projecting position (as illustrated in Fig. 2), where it remains during use. In this regard, it is to be noted that in order to provide the small size and degree of compactness envisioned by the inventions, the forwardly-projecting open door 46 actually moves alongside and partially hoods part of a gear train 76 comprising a portion of the positioner 20 (Figs. 1 and 2), in particular, a worm segment 86 (described in more detail hereinafter).

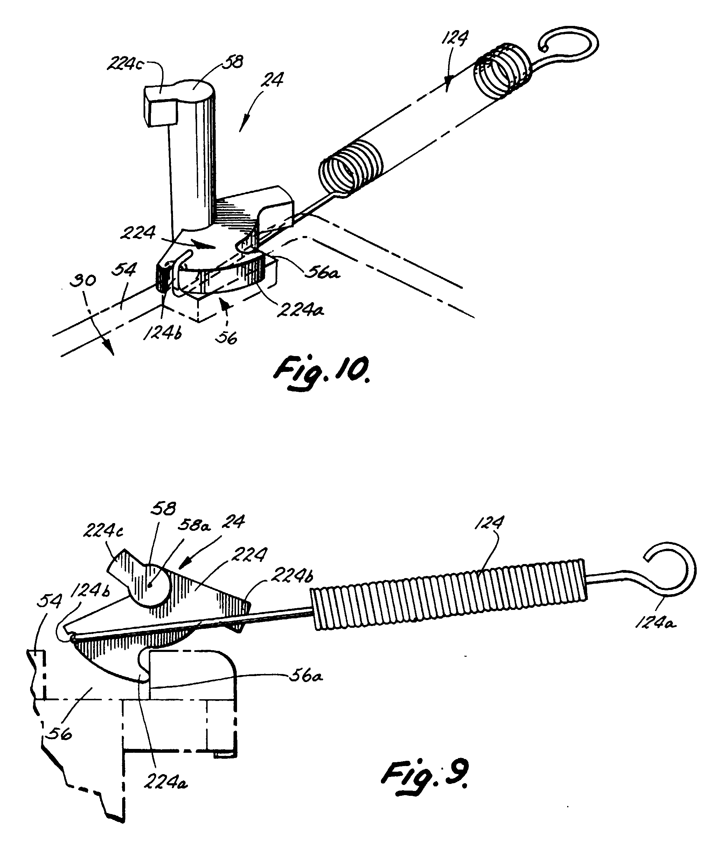

In actual practice, the lower cartridge flange 54 just noted comprises the side edge extremities of a metal or other rigid base plate, which covers the entire bottom of the cartridge and projects laterally beyond the central portion thereof to define the bottom of the aforementioned loading recesses extending along each side of the cartridge. Near the front of cartridge 30, the base plate flanges 54 define a generally rectangular notch 56 (Figs. 2 and 9) whose forward edge 56a is utilized for cartridge loading and retention in accordance with the invention.

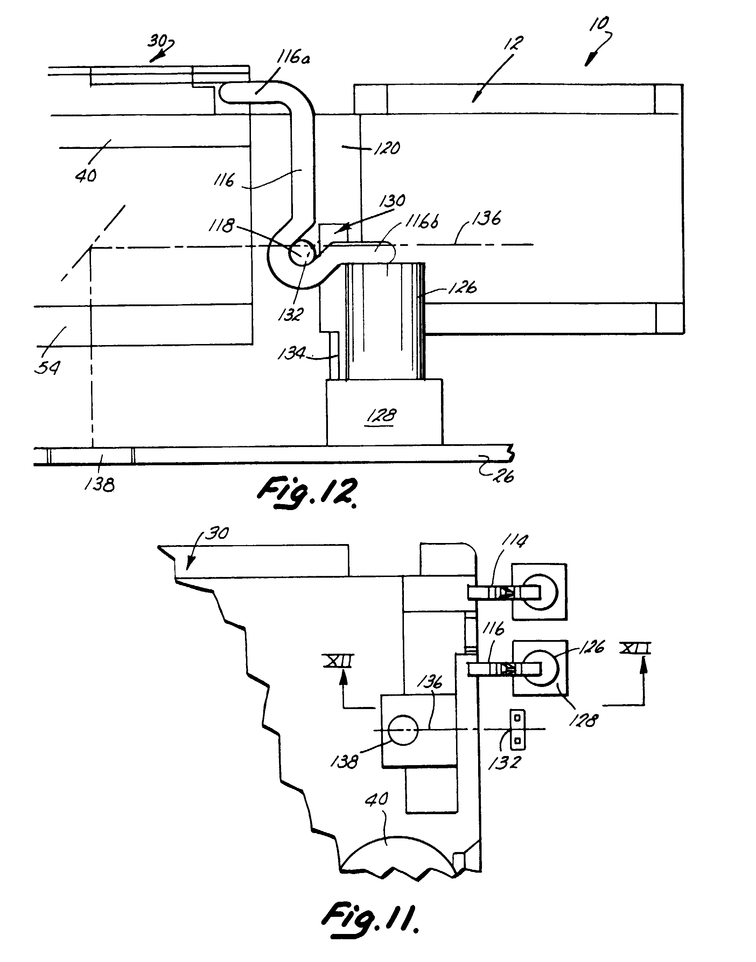

More particularly, the aforementioned cam mechanisms 22 and 24 located along opposite sides of frame 12 near the front extremity thereof each comprise a pivotable cam member 222, 224 (Figs. 1, 2, 9 and 10) which is secured to a generally cylindrical support shaft 58 that is disposed within a complementary recess in frame 12 so as to be rotatable about its longitudinal axis. The cam members 222, 224 (of which cam 224 shown in Figs. 9 and 10 is typical) include a pair of lobe projections 224a and 224b, and at the opposite end of shaft 58 a key-like member 224c of generally rectangular cross-section projects outwardly. In the fully-inserted position of cartridge 30, the notches 56 lie directly adjacent cam lobes 222 and 224, with the rotational axis 58a of cam shafts 58 in direct lateral alignment with the front edges 56a of such notches, and in this position of the cartridge 30 cam lobe portions 222a, 224a rotate into and lie within notches 56, bearing forwardly against the front edge 56a of and the notches 56. In this manner, the cams 22, 24 exert a continuing forwardly-directed resilient biasing force on cartridge 30 due to the effects of springs 122 and 124, thereby continuously maintaining the cartridge in proper operational position with its drive roller 40 resiliently urged against the drive capstan 16, and with transducer head 42 projected into the plane of recording tape 38, as illustrated in Figs. 1 and 2.

More particularly, the aforementioned elongated springs 122, 124 provide a bi-directional resilient biasing action to cams 22, 24 since these springs are mounted so that their longitudinal axis toggles over-centre across the rotational axis 58a of the cam shafts 58 as the cams move from one of their two different extremities of operational motion to the other during, and as a result of cartridge insertion and withdrawal (compare Figs. 2 and 9). That is, prior to insertion of cartridge 30 (Fig. 2) the longitudinal axis of springs 122 and 124 lies outside cam shaft axis 58a and the cam lobes 222, 224 are pivoted into a position where lobe portions 222a and 224a lie outside notch 56 while lobe portions 222b and 224b are aligned with the forward corners of cartridge 30. Upon further cartridge insertion, the forward corners of cartridge 30 contact the inside surface of cam lobes 222b and 224b and push them forward, causing the cam members 222, 224 to rotate toward the position seen in Figs. 9 and 10, initially opposed by the tension forces exerted by springs 122 and 124. At the point where cam lobes 222b and 224b have been rotated sufficiently forward to bring the axis of springs 122 and 124 across and inside of pivot axis 58a, cam lobes 222 and 224 are suddenly pulled in the opposite rotational direction by the resultant spring force, whereupon cam lobes 222a and 224a spring forward under their resilient biasing, moving into contact with cartridge notch edge 56a and applying a resilient biasing force thereto which tends to assist cartridge insertion, pulling the cartridge firmly into its fully-inserted position and holding it in that position throughout use. Conversely, when the cartridge is retracted manually to remove it from the drive 10, the resilient biasing effect attributable to springs 122, 124 initially opposes withdrawal until the cartridge has been drawn far enough out of the drive to bring the longitudinal axis of springs 122, 124 outside cam shaft axis 58a, whereupon the cams snap into their other rotational position (e.g., Fig. 2), withdrawing cam lobes 222a/224a from notch 56 and bringing cam lobes 222b/224b against the front corners of the cartridge 30 with a resilient bias which ejects the cartridge from the drive.

Accordingly, it will be seen that the cam mechanisms 22, 24 not only operate to positively maintain continuous full engagement of the cartridge 30 within the drive 10 at all times during use, but in addition provide both insertion and ejection forces by which positive loading and unloading is accomplished and favourable operator "feel" is ensured throughout the cartridge-loading process, in the form of continuous firm resistance which changes into positive spring-biased assistance. The aforementioned key-like projections 222c/224c facilitate assembly of the cam mechanisms, in that the cam members 22, 24 are mounted by inserting the ends of shafts 58 carrying key projections 222c/224c upwardly into appropriate cylindrical recesses formed in the frame 12 which have substantially the same cross-sectional configuration as that of shafts 58 and key-like portions 222c/224c, until such time as the cam lobes 222, 224 contact the lower surface of frame side rails 52a, 52b, whereupon slight rotation of the cam members moves the key-like projections 222c/224c laterally of the keyways through which they pass during upward insertion, thereby automatically retaining the cam members 22, 24 in proper position for attachment of springs 122/124. As illustrated in Fig. 9, this may be accomplished by engaging an offset front hook-like extremity 122b, 124b of the springs into a receiving notch in cam lobes 222/224, and mounting the rear eyelet extremity 122a/124a of the springs over appropriate mounting posts provided by frame 12 (see Fig. 4). Thus, assembly of the cam mechanisms into their operational position in frame 12 is rapid and simple.

As already indicated, drive motion is imparted to the tape 38 within cartridge 30 by capstan assembly 16, which has a drive roller that comes into direct edge-to-edge abutment with the tape cartridge drive roller 40 when the cartridge 30 has been fully inserted into the drive 10 (Fig. 1), capstan 16 being coupled to drive motor 14 by the semi-elastic belt 18. The structure, position, and mounting of the capstan assembly 16 is shown in Figs. 1, 3, 5 and 8. Basically, capstan assembly 16 comprises a drive wheel 60 concentrically mounted upon (and preferably press-fitted onto) a shaft 62 which is rotatably mounted in a generally channel-shaped carrier 64. Shaft 62 extends downwardly through carrier 64 and has the drive pulley 36 secured (preferably by press-fitting) to its lower extremity, with drive belt 18 being entrained about drive pulley 36. For reasons explained more fully hereinafter, drive pulley 36 preferably has a slightly crowned (i.e., outwardly convex) drive face. It is to be noted that carrier 64 is preferably a one-piece moulded part made of plastic which has an accurately-dimensioned aperture moulded in place to receive the rotatable shaft 62. Thus, carrier 64 provides an integral plastic bushing for shaft 62, which is preferably a metal rod of precise diameter.

The two downwardly-depending leg portions 64a and 64b of carrier 64 each include an elongated mounting recess 68 having a rounded inner end surface 68c. The entire capstan assembly 16 is mounted by engaging recesses 68 upon a pair of opposed pin projections 70a, 70b (Fig. 3) which may be integrally formed with each of a pair of forwardly-projecting walls 312 which extend outwardly from the interior wall portion 212 of frame rib 112. To facilitate such mounting, the rearwardly-opening end of mounting slots 68 may be divergently chamferred, as shown by the angled surfaces designated by numeral 66 in Fig. 8.

It is to be noted that the carrier structure 64 just described provides a pivotal mounting support for the capstan assembly 16, since the carrier 64 is rotatable about support pins 70a and 70b, which engage the arcuate inner ends 68c of the carrier mounting recess 68. In this regard, the centre of curvature of the two spaced arcuate inner end surfaces 68a lie on a line which is perpendicular to and which intersects the longitudinal axis of capstan support shaft 62, as well as extending along a diameter of drive pulley 36 and through the central plane of the latter. Thus, pivotal motion of the capstan assembly 16 about support pins 70a, 70b occurs about the centerline of drive belt 18, with the crowned face of drive pulley 36 lying substantially coincident with the radius of such pivotal motion. The semi-elastic belt 18 preferably has an overall length such that, when the belt is entrained about capstan drive pulley 36 and motor drive pulley 34, the belt pulls the capstan drive pulley 36 slightly back toward the rear portion of the drive 10, i.e., generally toward motor 14, thereby pivoting the upper part of rotatable shaft 62 slightly forward, moving capstan drive wheel 60 in that same direction and holding it in that position with a very small amount of resilient bias corresponding to slight tension imparted to drive belt 18. This holds the carrier 64 firmly in place, and also holds the drive wheel 60 in a slightly tilted position wherein full insertion of cartridge 30 will push capstan drive wheel 60 rearwardly a slight amount, thereby increasing the tension of belt 18 and maintaining positive drive force between capstan drive wheel 60 and cartridge drive roller 40.

As shown in the drawings, the capstan drive wheel 60 preferably comprises an inner support hub portion 66′, which is preferably molded from a lightweight, rigid plastic, and an outer drive rim 72 (Fig. 8) carried on the annular outer skirt 66a of hub 66. Preferably, the sleeve-like drive rim 72 is of a rubber-like material which is molded directly in place upon the plastic support hub 66′, for reasons of both manufacturing economy and performance, and in this regard it has been found that preferred materials for the support hub 66′ and drive rim 72 are polyester and pelothane (urethane rubber), respectively. In addition, the drive rim 72 is preferably of relatively thin section, for example about 1.27 mm (0.050 inches) in thickness, and also preferably relatively hard e.g., with a durometer of approximately 75, which parameters give the drive rim preferred drive performance characteristics (including desirable surface friction and minimal diameter-distorting compressibility, as well as favorable wear capabilities).

The head-positioning mechanism 20 referred to generally hereinabove in conjunction with Fig. 1 is illustrated in more detail in Figs. 2, 5, 6 and 7, from which it will be seen that such mechanism basically comprises a drive motor 74, a gear train 76, a head slide 78 which is vertically reciprocable upon a support shaft 80, and a head-mounting carrier 82 which is secured to or integral with slide 78.

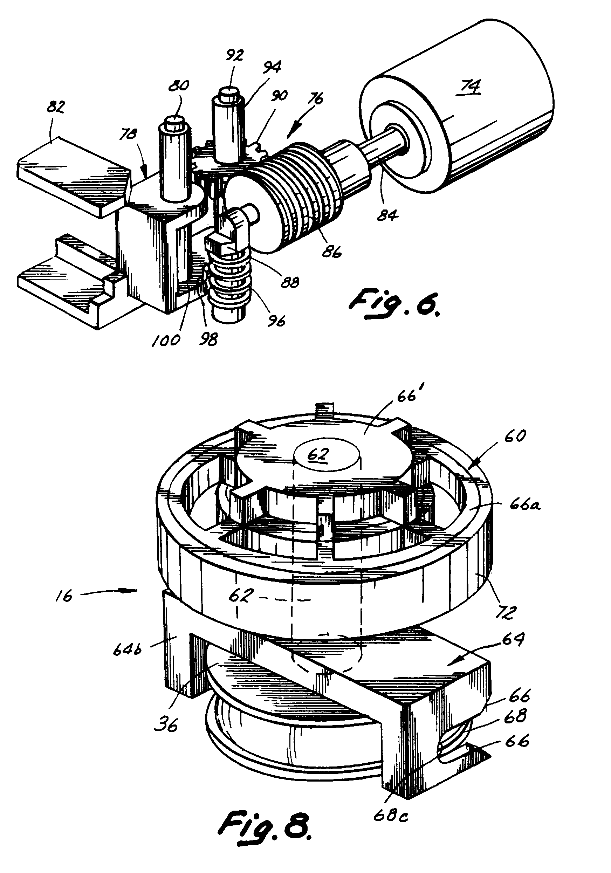

More particularly, the positioner drive motor 74 is preferably a stepper, whose output shaft 84 has its longitudinal axis disposed in alignment with, and lying within, the plane of the main support frame 12 (and, thus, generally perpendicular to the output shaft of the tape-drive motor 14 and capstan 16). The positioner motor output shaft 84 carries a worm segment 86 near its outboard end extremity, and the latter is preferably supported by a shelf-like flange 88 that is integrally moulded with or otherwise secured to the main frame 12 (Figs. 1 and 3). The worm segment 86 is preferably made in sleeve-like form and separate from the motor output shaft 84, being telescoped over and secured for rotation with the latter, to facilitate manufacture and provide for convenient changes in worm thread specification from time to time. As so mounted, the worm segment 86 mates with, and drives, a worm gear 90 which is rotatably mounted upon a vertical shaft 94 that is supported about its end extremities 92. Worm gear 90 comprises part of a composite gear structure, being concentrically disposed with respect to, and secured for rotation with, a lead screw member 96 which is formed integrally with or else slidably telescoped over support rod 94 at a point below worm gear 90 and at the level of a rearwardly-projecting arm 100 that is part of, and rigidly coupled to, the head slide 78 (Fig. 7). Accordingly, lead screw 96 is integrally secured to and rotatably driven by worm gear 90. In turn, lead screw 96 engages a follower nut 98 (Figs. 6 and 7) which preferably comprises an arcuate recess carrying integrally molded screw threads complementary to lead screw 96 and formed in the rearwardly-projecting arm portion 100 of head slide 78.

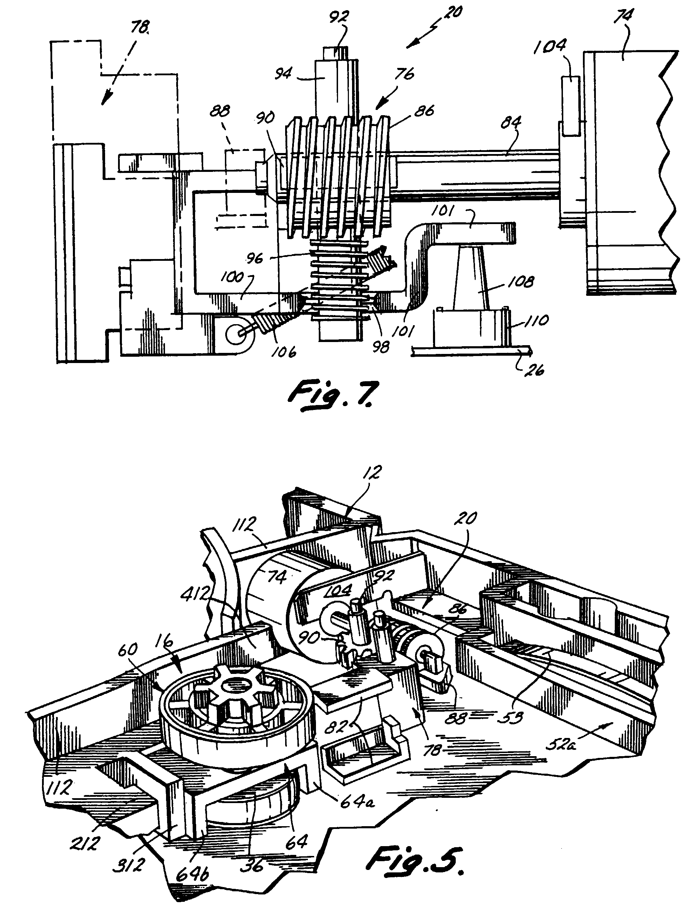

As previously noted, the outboard end extremity of the positioner motor shaft 84 is supported by a member 88 (Figs. 3, 5 and 7) which preferably comprises an integral part of the main frame 12, projecting outwardly from interior wall portions thereof (not specifically shown). Somewhat similarly, the lowermost extremities of lead screw support shaft 94 and head slide support shaft 80 may be supported by other such frame portions or, alternatively, in appropriate recesses provided by the printed circuit board 26. The upper portions of these vertically-oriented shafts may be captured and supported in place by a removeable metal or other such plate 102 (Figs 1 and 3) which is secured by screws or the like to portions of the frame 12 (including the interior ribs or wall 112 thereof). The positioner motor 74 rests upon, and is primarily positioned by, a portion of frame 12 comprising an interior rib 412 (Fig. 5) which has a semi-cylindrical saddle-like recess in its upper extremity of complementary curvature to that of the outside of motor 74, and a hold-down plate or arm 104 fits against the front side of motor 74 and holds the latter firmly in position against support rib 412 while also precluding movement of motor 74 axially with respect to its output shaft 84.

To help ensure precision in the reciprocating vertical motion of head slide 78 along its support shaft 80, as for example to remove the effects of backlash in the engagement of lead screw 96 and follower 98, a continuous vertical biasing force is preferably applied to the head slide, as for example by the angularly-disposed tension spring 106 (Figs. 1, 3 and 7) which extends between the bottom of the head carrier 82 and the interior frame wall 112. Of course, other implementations of such a resilient biasing force may also be used, including for example a spring or spring-wire clip (not shown) extending between the rearwardly-projecting arm portion 100 of the head slide and the motor output shaft 84.

It should particularly be noted that the rearwardly-projecting arm portion 100 of head slide 78 includes an angularly-offset rear extremity 101 (Fig. 7) which is positioned immediately above the actuator post 108 of a microswitch 110 mounted atop the printed circuit board 26. This arrangement provides an accurately-positioned reference to indicate the bottom or lowermost position of allowable head travel as a function of the downward motion of head slide 78 in response to corresponding drive motion by positioner 20. Preferably, microswitch 110 is of the type frequently employed in keyboards to register actuation of the different keys (i.e., "keyswitches"), which are typically of buckling dome configuration, since these are actuated by very small deflections and have high reliability and accurate repeatability. Thus, a highly reliable signal is provided by switch 110 to indicate one specific head position, which may be referenced to the drive control electronics for use as a logic value, and which may also be utilized to positively preclude further downward motion of the head slide when it has reached that particular extremity of travel (and/or to initiate automatic positioner drive-direction reversal). This high accuracy is important due to the limited travel of the head in such a small drive configuration.

The drive 10 in accordance with the embodiment also includes novel and advantageous implementations of tape and tape cartridge detection and control functions, as may be seen generally in Figs. 1 and 3 and more particularly in Figs. 11 and 12. That is, cartridge-presence and write-protect functions are provided by a pair of small crankpins 114, 116, which are pivotally mounted upon hortizontally-extending pins 118 (Figs. 3 and 12) or the like mounted in forwardly-projecting flange portions 120 of the interior frame wall 112. As best seen in Fig. 12, the offset uppermost extremity (e.g., portion 116a) of the crankpins 114, 116 (which are essentially identical in configuration and relative positioning) is particularly positioned to be encountered by designated portions of the leading surface of cartridge 30 when the same is fully inserted into drive 10 for operation.

That is, tape cartridges typically include a write-protect feature, usually by some form of moveable tab or door located in a specific position, whose relative presence or absence indicate whether the user wishes to guard against overwriting of the tape within that cartridge. The particular cartridge 30 identified above and utilized herein to describe preferred embodiments of the drive 10 incorporates a laterally slideable door along the upper edge of the cartridge face, which can be slid from one to the other of two positions to indicate whether write-protection is or is not desired. Upper crankpin extremity 116a is precisely located to either engage such door if it is in the "closed" position, indicating that write-protection is not desired, or else to directly enter into the space lying behind the door in the event it is in the "write-protect" position. Accordingly, if the upper extremity 116a of crankpin 116 engages a closed write-protect door, the lowermost extremity 116b will depress the actuator portion 126 of a microswitch 128, which may be implemented by the same type of switch as that utilized for the head-referencing microswitch 110 described above. Thus, relatively minute motion (on the order of a few thousandths of an inch) of crankpin 116 will indicate whether write-protection is desired, and substantially the same arrangement is utilized in conjunction with crankpin 114, which is disposed to encounter the leading edge of cartridge 30 when it is fully inserted into the drive 10, to thereby provide a positive indication of whether or not a cartridge is in position for read/write operation of the drive (i.e., a "cartridge present" signal). The relatively high tolerances associated with commercial versions of the cartridge require a very precise but flexible (i.e., adaptive) system to operate reliably with all of the different cartridge variations which may be encountered in actual practice.

The drive 10 additionally incorporates a particularly advantegous implementation of the end-of-tape, beginning-of-tape ("EOT/BOT") detection utilized in conjunction with the cartridge 30 in accordance with the capability provided therein by its manufacturer. More particularly, with continuing reference to Figs. 1, 3, 11 and 12 it will be seen that printed circuit board 26 mounts an integrally-attached light receiver 130, comprising for example a light-receiving aperture 132 (Fig. 12) disposed upon a suitable support and coupled by a light guide 134 of clear plastic or the like to a phototransistor mounted directly below on PC board 26. The light-receiver device 132 is thus preferably secured in place upon and precisely located by PC board 26 so as to be in registration with a light-transmissive port (not specifically shown) provided in the face of cartridge 30 by its manufacturer at a position where an incident light beam will directly intersect the tape within the cartridge, so that the beam may detect light-tranmissive apertures or the like provided in the tape (or its leader) at the beginning and end of the tape. Alternatively, the light receiver 132 and guide 134 may be attached to frame 12 in proper position for alignment with the phototransistor (or other detector) carried on PC board 26.

The light received by detector 132 is provided by a source 138 (e.g., an L.E.D.) carried on PC board 26 at a point below cartridge 30. That is, such light travels along a hortizontal axis (designated by the numeral 136 in Figs. 11 and 12) to intersect the aforementioned EOT/BOT apertures in the tape and the window in the cartridge face, following deflection of the light beam by a mirror surface or prism (not shown) within the cartridge 30. In accordance with the present embodiment light source 138 is mounted directly upon PC board 26 in the appropriate location and preferably disposed within a recess provided in the circuit board, so as not to protrude upwardly into the plane of cartridge 30.

In accordance with the foregoing, it will be appreciated that the embodiment provides an improved and desirable form of optical EOT/BOT system, in which both source and detector are hard-mounted with respect to their electrically-interconnective PC board, and which in fact need not include any elongated conductors extending outwardly from such board. In an overall functional sense, the same is true of the cartridge-present and write-protect features described above, in which the signaling microswitches (e.g., keyswitch 128) are permanently mounted in precisely the right position upon, and carried by, the PC board 26.

In operation, it will be appreciated that in order to load the cartridge 30 into the drive 10, the operator merely inserts the cartridge face-forward into the end opening provided by frame 12 (facing the drive capstan 16), with the recesses along each side of the cartridge receiving the oppositely disposed, elongated loading ribs 52a, 52b which extend along each side of frame 12. Due to the angularly-chamferred end extremities of rails 52a, 52b, proper alignment and initial insertion of the cartridge 30 is readily achieved, and the cartridge is in effect guided into proper position as it is pushed along the loading rails and into the loaded position. As the cartridge progresses along rails 52a, 52b, the front portion of its laterally-extending side edges, defining the upper lateral projections 55 noted previously (Figs. 2 and 3) encounters a corresponding pair of elongated leaf springs 53 mounted atop rails 52a, 52b (preferably by entrapping offset end extremities of the springs in corresponding pockets molded into the tops of rails 52a, 52b). As the cartridge is moved forward further, the leaf springs 53 exert an upward force against the upper side edges 55 of the cartridge, lifting the cartridge upward and maintaining firm sliding contact between the upper surfaces of the cartridge base plate 54 and the bottom longitudinal surface of loading ribs 52a, 52b (Fig. 3). In this manner, precise referencing of the cartridge into a predetermined loading plane is achieved with a high degree of consistency, and in a completely easy and automatic way. Such cartridge referencing is of course very important to the proper operation of the drive and cartridge, since the latter must be in essentially the same position each time it is inserted into the drive, in order to ensure proper alignment and operation of the various actuating and control elements (including the capstan drive roller 60, head 42, EOT/BOT source and sensor 130, 138, and the write-protect and cartridge-present sensors 114, 116).

As the cartridge is so moved forward into proper vertically-referenced position, the forwardmost corners of the cartridge encounter the cam lobe portions 222b, 224b of loading and locking cams 22, 24, and rotation of the cams commences. Initially, such rotation is opposed by springs 122, 124, but upon a sufficient degree of cartridge insertion the longitudinal axis of these springs moves over centre (i.e., across rotational axis 58a), whereupon the cam lobe portions 222a, 224a immediately "snap" forward against edge 56a of the cartridge side notch 56, whereupon the cartridge is automatically pulled forward into properly-referenced position by the force of springs 122, 124. The forward loading motion of the cartridge continues under the spring force exerted through cam lobe portions 222a, 224a until the cartridge has come into its proper forward reference position, with cartridge tape-drive roller 40 spring-biased against the drive capstan roller 60, pushing the latter rearwardly to the extent permitted by resilient loading of drive belt 18, and/or opposed by a light spring (not shown) which urges the capstan forwardly toward its tilted position noted above. In this position, the head 42 has engaged the tape 38 with the desired tape path deflection and the cartridge-presence and write-protect levers or cranks 114, 116 have actuated their corresponding switches 128 in the desired manner. Futher, EOT/BOT optical member 130 is located directly adjacent the forward edge of cartridge 30, in a position where it is in registry with the sensing aperture provided by the tape cartridge manufacturer, whereby corresponding detection and function may occur automatically.

Thus, while manually initiated, cartridge loading is in effect automatically completed with corresponding cartridge-positioning and referencing, since after a predetermined amount of cartridge insertion the loading cams 22, 24 in effect take over and automatically pull the cartridge into its proper forward position. Conversely, in order to retract the cartridge out of the drive, the operator initially pulls rearwardly upon the protruding cartridge portion 32 against the initial resistance provided by springs 122, 124, but after a predetermined small amount of such spring-resisted rearward movement, springs 122, 124 go "over centre", whereupon the forward portions of cams 22, 24 spring into position against the front part of the cartridge and in effect boost it rearwardly out. Thus, cartridge loading has a crisp, positive feel, and proper loading and referencing is automatically assured.

Once a cartridge has been so loaded, the corresponding operation of the drive will be readily apparent. In this regard, the cartridge continues to be positively held in position by the cams 22, 24 at all times, with positive spring force between the capstan drive roller 60 and the tape drive roller 40. Of course, the head 42 is subject to continuous vertical motion across the width of the tape 38, from one closely-adjacent track to another extending lenghthwise of the tape, due to the operation of the head positioner 20, i.e., upon corresponding controlled excitation of stepper motor 74 and corresponding movement of the worm-gear and lead screw-follower gear mechanism 76, resulting in reciprocal movement of head slide 78 along its support rod 80.

In this regard, it will be appreciated that initial functioning of the head-positioning mechanism may readily be implemented by a command which moves head carrier 78 downwardly from whatever position it is initially in, to the extent necessary to bring the portion 101 of head slide arm 100 into contact with actuator portion 108 of referencing switch 110, creating a corresponding electrical signal which may be used to reference a first, known and repeatable "home" position. Following that, other edge-of-tape referencing procedures of a known nature may be utilized, and track-to-track head positioning may occur on either an open-loop or closed-loop basis (utilizing positioning reference servo signals recorded upon the tape to denote the position, and typically the identity of each different track).

It should be appreciated that the particular nature of the head-positioning mechanism 20 provides for great precision and controllability of each incremental point in the overall allowable range of head motion with practically no friction and hysteresis effects, as a result of the worm-gear and lead screw-follower componentry, especially as combined herein. That is, the progressive increments of head motion in response to positioner motor actuation may be exceedingly small, allowing for great precision due to the high resolution involved. At the same time, the amount of mechanical advantage is very substantial, and as a result there is virtually no likelihood of position-reversal or positioning relaxation (i.e., reverse motion of the positioner mechanism), while at the same time there are very low torque requirements for the control motor 74, allowing use of a motor for this purpose which is of relatively small physical size, as depicted in the drawings. In addition, the structural nature of the gear train 76, particularly as disclosed herein, allows for easy and inexpensive changes in gear ratios, etc. if and when desired, as for example to change track spacing and positioner resolution, etc.

It is to be understood that the foregoing description of a preferred embodiment of the invention is provided for purposes of the description and illustration, and not as a measure of the invention, whose scope is to be defined by reference to the ensuing claims. Thus, while those skilled in the art may devise embodiments of the particular concepts presented in the foregoing illustrative disclosure which differs somewhat from the particular embodiment shown and described in detail herein, or may make various changes in structural details to the illustrated embodiment, all such alternative or modified versions are embodiments of the invention to the extent that they are within the scope of the claims.

## Claims

1. A tape drive (10) suitable for use in digital data storage, the drive including a support frame structure (12) having a height which is substantially less than its length or width, the tape drive (10) having front and rear portions and a tape cartridge admittance opening (44) at the front thereof; a tape drive motor (14) of generally flat configuration disposed in generally coplanar relation with the frame structure (12) and mounted upon a portion thereof disposed generally at the rear of the drive, the drive motor (14) having a rotary output shaft extending generally perpendicular to the length and width of the frame structure; a tape drive capstan (16) located forwardly of the drive with respect to the motor and having tape-driving portions disposed in alignment with the tape cartridge admittance opening (44) to operatively engage a tape cartridge (30) when inserted thereinto and thereby effect transport of a tape (38) in such a cartridge; means (18) flexibly coupling the capstan (16) to the motor output shaft for rotation thereby; and a head-positioner assembly (20) supported on the frame structure (12) and having means (82) for mounting a transducer head for reciprocal movement along an axis extending generally parallel to the height of the drive and perpendicular to its length and width, the tape drive (10) being characterised in that said head-positioner assembly (20) further comprises a positioner motor (74) having an output shaft (84) extending generally lengthwise of the drive and
parallel to the frame structure (12), the positioner motor (74) having a diameter which is less than the overall height of the drive (10).

2. A tape drive as claimed in claim 1 in which the head-positioner assembly (20) includes a rotary drive-transmitting apparatus coupled between the positioner motor output shaft (84) and the means (82) for mounting a transducer head.

3. A tape drive as claimed in claim 2 in which the drive-transmitting apparatus comprises means for transmitting rotary motion along an angularly-extending path.

4. A tape drive as claimed in claim 3 in which the means for transmitting rotary motion includes at least one gear element (90).

5. A tape drive as claimed in claim 3 in which the means for transmitting rotary motion includes at least one rotary member having a threaded portion (86).

6. A tape drive as claimed in claim 3 in which the means for transmitting rotary motion includes at least one gear element (90) and at least one rotary member (86) coupled to the gear element and having a threaded portion for transmitting rotary motion.

7. A tape drive as claimed in claim 3 in which the means for transmitting rotary motion includes at least one worm-gear set (86,90).

8. A tape drive as claimed in any one of the preceding claims including a circuit board (26) extending lengthwise and widthwise of the frame structure (12) and secured thereto in generally parallel disposition therewith such that the thickness of the circuit board and the height of the frame structure together define the height of the drive (10).

9. A tape drive as claimed in any one of the preceding claims including means for loading a generally flat, planar tape cartridge (30) into predetermined operative position after initial insertion thereof through the admittance opening (44) in a direction generally parallel to the plane of the cartridge, the means for loading including a movable member disposed adjacent one side of a cartridge so inserted and mounted for movement toward and against the cartridge side along a path of motion lying within the cartridge plane.

10. A tape drive as claimed in claim 9 in which the movable member is mounted for pivotal movement about a pivot axis which extends generally perpendicular to the cartridge plane.

11. A tape drive as claimed in claim 10, in which the frame structure (12) has portions which extend forwardly of the tape drive motor (14) and toward the tape cartridge admittance opening (44) along one side of the drive, the extending frame structure portions carrying the pivotally-mounted movable member.

12. A tape drive as claimed in claim 11 in which the extending frame structure portions carry a pair of the movable members and each such member is disposed along an opposite side of the cartridge (30) for movement generally toward one another.

13. A tape drive as claimed in claim 9 in which the means for loading a cartridge includes a pair of the movable members, each such member being disposed along an opposite side of the cartridge (30) for movement generally toward one another.

14. A tape drive as claimed in claim 9 in which the means for loading a cartridge includes resilient biasing means (53) for urging the cartridge (30) toward the operative position.

15. A tape drive as claimed in claim 14 in which the resilient biasing means (53) act to urge the cartridge along a pair of different paths, one path lying generally within the cartridge plane and the other being oriented at an angle with respect to the plane.

16. A tape drive as claimed in claim 14 or claim 15 in which the resilient biasing means (53) acts upon the movable member to urge it against the side of the cartridge (30).

17. A tape drive as claimed in any one of claims 14 to 16 in which the resilient biasing means (53) is double-acting and arranged to urge the cartridge (30) in mutually opposite loading and unloading directions along the cartridge loading path when the cartridge (30) is located at different points therealong.

18. A tape drive as claimed in claim 17 in which the resilient biasing means includes an elongated spring (53) having a longitudinal axis which shifts overcentre with respect to the pivot axis during insertion and withdrawal of the cartridge (30).

19. A tape drive as claimed in any one of the preceding claims in which the tape drive motor (14) has a main body whose width is substantially greater than its thickness, exclusive of its output shaft, and wherein the motor width amounts to substantially fifty per cent or more of the overall width of the drive (10).

20. A tape drive as claimed in any one of the preceding claims in which the tape drive motor (14) has a main body whose width is substantially greater than its thickness, and wherein the motor body thickness amounts to substantially fifty per cent of the overall height of the drive (10).

21. A tape drive as claimed in any one of the preceding claims having length, width and height dimensions of substantially 14.0 cm (55 inches), 10.2 cm (4.0 inches) and 2.5 cm (1.0 inches).

22. A tape drive as claimed in any one of the preceding claims in which the head-positioner assembly (20) comprises a gear (90) rotated by the motor output shaft (84) and force-translating means driven by the gear and coupled to a tape head to move the same reciprocably through a plurality of positions extending across the width of the tape.

23. A tape drive as claimed in claim 22 including a worm (86) disposed coaxially on the motor output shaft (84) and engaging the gear (90) to rotate it.

24. A tape drive as claimed in claim 23 in which the gear is disposed in generally coplanar relation with a cartridge (30) inserted into the drive (10) for operation.

25. A tape drive as claimed in any one of claims 22 to 24 in which the force-translating means includes a lead screw and follower mechanism.

26. A tape drive as claimed in claim 25 in which the follower mechanism is directly coupled to a carrier member (82) on which the tape head is mounted.

27. A tape drive as claimed in claim 26 in which the follower mechanism comprises an integral portion of the carrier member (82).

28. A tape drive as claimed in any one of claims 25 to 26 in which the lead screw has an axis of rotation which is generally parallel to that of the gear (90).

29. A tape drive as claimed in claim 1 in which the tape drive capstan (16) includes a rotary tape-driving member adapted to engage a tape (38) contained in a cartridge (30) inserted into the drive (10) in a manner to transport the tape for recording operation, and a rotatable drive shaft coaxially attached to the rotary tape-driving member to impart rotation thereto, the drive shaft having an axis of rotation disposed generally parallel to the axis of the tape drive motor output shaft; a flexible drive belt (18) rotatably coupling the motor output shaft to the capstan drive shaft; and means mounting the drive shaft for pivotal movement about an axis extending generally perpendicular to the drive shaft axis of rotation and located at a point spaced along the drive shaft from the rotary tape-driving member.

30. A tape drive as claimed in claim 29 in which the drive belt (18) is disposed in a plane which intersects the drive shaft, and wherein the axis of pivotal movement lies substantially within the plane.

31. A tape drive as claimed in claim 30 in which the drive belt (18) is entrained around a pulley secured to the drive shaft, and the pulley being disposed generally within the said plane.

32. A tape drive as claimed in claim 30 in which the pulley is positioned to have a diameter which is substantially coincident with the axis of pivotal movement.

33. A tape drive as claimed in claim 32 in which the rotary tape-driving member is located in use in generally coplanar relation with a cartridge (30) inserted into the drive (10) for operation, when the cartridge is of the type having an accessible drive member for imparting transport motion to tape within such cartridge and the tape-driving member is disposed in direct alignment with the cartridge drive member to make drive-transmitting contact therewith upon full insertion of the cartridge into the drive for operation, and wherein the cartridge drive member bears against the tape-driving member and pivots the capstan assembly drive shaft about the pivot axis when the cartridge has been inserted into the drive as aforesaid.

34. A tape drive as claimed in any one of the preceding claims including means for referencing the position of the transducer head, comprising a switch (110) supported in position by the frame structure (12) and disposed in alignment with a portion of the head-positioner assembly (20) for actuation thereby at a predetermined extremity of the transducer positions, the switch producing a signal upon such actuation to indicate the presence of the transducer at the said extremity.

## Patentansprüche

1. Bandantriebsvorrichtung (10), die zum Einsatz in digitalen Datenspeichern geeignet ist, wobei die Antriebsvorrichtung eine Stützrahmenanordnung (12) mit einer Höhe aufweist, welche beträchtlich geringer ist als deren Länge oder Breite, wobei die Bandantriebsvorrichtung (10) vordere und hintere Bereiche sowie eine Bandkassetten-Aufnahmeöffnung (44) im vorderen Bereich, einen Bandantriebsmotor (14) mit im wesentlichen flacher Gestalt, welcher im allgemeinen in gleicher Ebene mit der Stützrahmenanordnung (12) angeordnet und an einem Teil von dieser, welcher im allgemeinen hinter der Antriebsvorrichtung angeordnet ist, befestigt ist, wobei der Antriebsmotor eine rotierende Abgangswelle aufweist, die sich im wesentlichen senkrecht zur Lange und Breite der Rahmenanordnung erstreckt; eine Bandantriebsrolle (16), die in bezug zum Motor vor der Antriebsvorrichtung angeordnet ist, und das Band antreibende Teile aufweist, die sich in Ausrichtung zur Bandkassetten-Aufnahmeöffnung (44) befinden, um funktionell an einer Bandkassette (30 anzugreifen, wenn diese darin eingelegt wird, und dadurch den Transport eines Bandes (38) in einer solchen Kassette zu bewirken; eine Einrichtung (18), die die Bandantriebsrolle (16) flexibel mit der Abgangswelle des Motors verbindet, um von dieser gedreht zu werden; und eine Kopfpositioniereinheit (20), die an der Rahmenanordnung (12) befestigt ist und zwecks wechselseitiger Bewegung entlang einer Achse aufweist, die sich im wesentlichen parallel zur Höhe der Antriebsvorrichtung und senkrecht zu deren Länge und Breite erstreckt, aufweist, wobei die Bandantriebsvorrichtung (10) **dadurch gekennzeichnet ist**, daß die Kopfpositioniereinheit (20) weiterhin umfaßt: einen Positioniermotor (74) mit einer Abtriebswelle (84), die sich im allgemeinen längs der Antriebsvorrichtung und parallel zum Stützrahmen (12) erstreckt, wobei der Positioniermotor (74) einen Durchmesser aufweist, welcher geringer ist als die Gesamthöhe der Antriebsvorrichtung.

2. Bandantriebsvorrichtung nach Anspruch 1, in der die Kopfpositioniereinheit (20) eine rotierende Antriebsübertragungseinrichtung umfaßt, die zwischen der Positioniermotor-Abtriebswelle (84) und der Einrichtung (282) zur Befestigung eines Magnetkopfes angeordnet ist.

3. Bandantriebsvorrichtung nach Anspruch 2, in der die AntriebsÜbertragungseinrichtung eine Einrichtung zur Übertragung einer Drehbewegung entlang einer sich abgewinkelt erstreckenden Bahn umfaßt.

4. Bandantriebsvorrichtung nach Anspruch 3, in der die Einrichtung zur Übertragung einer Drehbewegung mindestens ein Zahnradelement (90) umfaßt.

5. Bandantriebsvorrichtung nach Anspruch 3, in der die Einrichtung zur Übertragung einer Drehbewegung mindestens ein sich drehendes Teil mit einem mit Gewinde versehenen Abschnitt (86) umfaßt.

6. Bandantriebsvorrichtung nach Anspruch 3, in der die Einrichtung zur Übertragung einer Drehbewegung mindestens ein Zahnradelement (90) und mindestens ein rotierendes Element (86), welches mit dem Zahnradelement gekoppelt ist und einen mit Gewinde versehenen Abschnitt zur Übertragung einer Drehbewegung aufweist, umfaßt.

7. Bandantriebsvorrichtung nach Anspruch 3, in der die Einrichtung zur Übertragung einer Drehbewegung mindestens einen Schneckengetriebesatz (86, 90) aufweist.

8. Bandantriebsvorrichtung nach einem der vorhergehenden Ansprüche, die eine Leiterplatte (26) umfaßt, die sich entlang der Länge und der Breite der Rahmenanordnung (12) erstreckt und an dieser in im wesentlichen paralleler Anordnung befestigt ist, so daß die Dicke der Leiterplatte und die Höhe der Rahmenanordnung zusammen die Höhe des Laufwerkes (10) bestimmen.

9. Bandantriebsvorrichtung nach einem der vorhergehenden Ansprüche, die eine Einrichtung zum Laden einer im wesentlichen flachen, ebenen Bandkassette (30) in eine bestimmte Betriebsposition nach dem anfänglichen Einsetzen durch die Aufnahmeöffnung (44) in einer Richtung, welche im wesentlichen parallel zur Ebene der Kassette verläuft, umfaßt, wobei die Einrichtung zum Laden ein bewegliches Teil aufweist, welches neben einer Seite einer Kassette angeordnet und so eingefügt und befestigt ist, daß es zur Kassettenseite hin und gegen diese entlang einer Bewegungsbahn bewegt werden kann, welche innerhalb der Kassettenebene liegt.

10. Bandantriebsvorrichtung nach Anspruch 9, in der das bewegliche Teil so befestigt ist, daß es eine Schwenkbewegung um eine Scharnierachse, welche sich im wesentlichen senkrecht zur Kassettenebene erstreckt, ausführen kann.

11. Bandantriebsvorrichtung nach Anspruch 10, in der die Rahmenanordnung (12) Bereiche aufweist, welche sich vor dem Bandantriebsmotor (14) und zur Bandkassetten-Aufnahmeöffnung (44) hin entlang einer Seite der Antriebsvorrichtung erstrecken, wobei die .vorstehenden Teile der Rahmenordndung das schwenkbar befestigte, bewegliche Teil tragen.

12. Bandantriebsvorrichtung nach Anspruch 11, in der die vorstehenden Teile der Rahmenanordnung ein Paar beweglicher Teile tragen und in der jedes dieser Teile entlang einer gegenüberliegenden Seite der Kassette (30), um sich im wesentlichen aufeinander zu zu bewegen, angeordnet ist.

13. Bandantriebsvorrichtung nach Anspruch 9, in der die Einrichtung zum Laden einer einer Kassette ein Paar bewegliche Teile umfaßt, wobei jedes dieser Teile entlang einer gegenüberliegenden Seite der Kassette (30), um sich im wesentlichen aufeinander zu zu bewegen, angeordnet ist.

14. Bandantriebsvorrichtung nach Anspruch 9, in der die Einrichtung zum Laden einer Kassette eine elastische Vorspannungseinrichtung (53) aufweist, um die Kassette (30) in die Betriebslage zu drücken.

15. Bandantriebsvorrichtung nach Anspruch 14, in der die elastische Vorspannungseinrichtung so wirkt, daß sie die Kassette entlang eines Paares von verschiedenen Bahnen drückt, wobei eine Bahn im wesentlichen in der Kassettenebene liegt und die andere Bahn in bezug zur Ebene in einem Winkel verläuft.

16. Bandantriebsvorrichtung nach Anspruch 14 oder 15, in der die elastische Vorspannungseinrichtung (53) auf das bewegliche Teil einwirkt, um es gegen die Seite der Kassette (30) zu drücken.

17. Bandantriebsvorrichtung nach den Ansprüchen 14 bis 16, in der die elastische Vorspannungseinrichtung (53) eine zweifache Wirkung entfaltet und so angeordnet ist, daß sie die Kassette (30) in zueinander entgegengesetzte Lade- und Entladerichtungen entlang der Kassettenladebahn drückt, wenn sich die Kassette (30) an unterschiedlichen Punkten entlang dieser Bahn befindet.

18. Bandantriebsvorrichtung nach Anspruch 17, in der die elastische Vorspannungseinrichtung eine längliche Feder (53) mit einer Längsachse aufweist, welche sich in bezug auf die Schwenkachse während des Einlegens und Entnehmens der Kassette (30) über die Mitte verlagert.

19. Bandantriebsvorrichtung nach einem der vorhergehenden Ansprüche, in der der Bandantriebsmotor (14) einen Grundkörper aufweist, dessen Breite, abgesehen von der Abtriebswelle, beträchtlich größer ist als dessen Dicke, und worin die Breite des Motors im wesentlichen fünfzig Prozent oder mehr von der Gesamtbreite der Antriebsvorrichtung (10) beträgt.

20. Bandantriebsvorrichtung nach einem der vorhergehenden Ansprüche, in der der Bandantriebsmotor (14) einen Grundkörper aufweist, dessen Breite beträchtlich größer als dessen Dicke ist, und worin die Dicke des Motorkörpers im wesentlichen fünfzig Prozent der Gesamthöhe der Antriebsvorrichtung (10) beträgt.

21. Bandantriebsvorrichtung nach einem der vorhergehenden Ansprüche, in der die Längen-, Breiten- und Höhenabmessungen im wesentlichen 14,0 cm (55 inches), 10,2 cm (4,0 inches) und 2,5 cm (1,0 inches) betragen.

22. Bandantriebsvorrichtung nach einem der vorhergehenden Ansprüche, in der die Kopfpositioniereinheit (20) ein Zahnrad (90) umfaßt, das durch die Motorabtriebswelle (84) gedreht wird, sowie eine kraftübertragende Einrichtung, die durch das Zahnrad angetrieben wird und mit einem Magnetkopf gekoppelt ist, um diesen über eine Vielzahl von Positionen, die sich über die Breite des Bandes erstrecken, hin- und herzubewegen.

23. Bandantriebsvorrichtung nach Anspruch 22, mit einem Schneckenrad (86), welches koaxial an der Abgangswelle (84) des Motors angeordnet ist und in das Zahnrad (90) eingreift, um dieses zu drehen.

24. Bandantriebsvorrichtung nach Anspruch 23, in der das Zahnrad im wesentlichen koplanar zu einer in das Laufwerk (10) betriebsmäßig eingesetzten Kassette (30) angeordnet ist.

25. Bandantriebsvorrichtung nach einem oder mehreren der Ansprüche 22 bis 24, in der die kraftübertragende Einrichtung eine Leitspindel und einen Nachlaufmechanismus umfaßt.

26. Bandantriebsvorrichtung nach Anspruch 25, in der der Nachlaufmechanismus mit einem Tragteil ((82) gekoppelt ist, auf welchem der Bandkopf befestigt ist.

27. Bandantriebsvorrichtung nach Anspruch 26, in der der Nachlaufmechanismus ein integrales Teil des Tragteiles (82) umfaßt.

28. Bandantriebsvorrichtung nach Anspruch 25 oder 26, in der die Leitspindel eine Drehachse aufweist, die im wesentlichen parallel zu der des Zahnrades (90) verläuft.

29. Bandantriebsvorrichtung nach Anspruch 1, in der die Bandantriebsrolle (16) ein rotierendes, das Band antreibendes Teil umfaßt, das so gestaltet ist, daß es ein Magnetband (38), das sich in einer in die Antriebseinrichtung (10) eingelegten Kassette (30) befindet, so erfaßt, daß es das Band zum Zweck des Aufzeichnens bewegt, und eine drehende Antriebswelle, die koaxial zu dem sich drehenden das Magnetband antreibenden Teil befestigt ist, um dieses zu drehen, wobei die Antriebswelle eine Rotationsachse aufweist, die im wesentlichen parallel zur Achse der Abtriebswelle des Antriebsmotors angeordnet ist; eine flexible Antriebspese (18), die Abtriebswelle des Motors mit der Welle der Bandantriebsrolle verbindet; und Mittel, die die Antriebswelle zwecks Schwenkbewegung um eine Achse fixieren, die sich im wesentlichen senkrecht zur Rotationsachse der Antriebswelle erstreckt und an einem Punkt angeordnet ist, der unter Abstand entlang der Antriebswelle des rotierenden, das Magnetband antreibenden Teiles angeordnet ist.

30. Bandantriebsvorrichtung nach Anspruch 29, in der die Antriebspese (18) in einer Ebene angeordnet ist, welche die Antriebswelle kreuzt, und in der die Achse der Schwenkbewegung im wesentlichen in der Ebene liegt.

31. Bandantriebsvorrichtung nach Anspruch 30, in der die Antriebspese (18) um eine Riemenscheibe geführt ist, welche an der Antriebswelle befestigt ist und in der die Riemenscheibe im wesentlichen in der genannten Ebene angeordnet ist.

32. Bandantriebsvorrichtung nach Anspruch 30, in der die Riemenscheibe so angeordnet ist, daß sie einen Durchmesser aufweist, welcher im wesentlichen mit der Achse der Schwenkbewegung übereinstimmt.

33. Bandantriebsvorrichtung nach Anspruch 32, in der das rotierende, das Band antreibende Teil im Einsatz im allgemeinen koplanar zu einer in die Bandantriebsvorrichtung (10) zum Betrieb eingelegten Kassette (30) angeordnet ist, wenn die Kassette von dem Typ ist, der ein für die Übertragung der Antriebsbewegung auf das Magnetband innerhalb einer solchen Kassette geeignetes Antriebsteil aufweist, und bei dem sich das Antriebsteil in direkter Ausrichtung mit dem Kassetten-Antriebsteil befindet, um damit beim vollständigen Einlegen der Kassette zum Betrieb in die Antriebsvorrichtung einen den Antrieb übertragenden Kontakt herzustellen, und bei dem das Kassetten-Antriebsteil gegen das Antriebsteil der Antriebsvorrichtung drückt und die Antriebswelle der Antriebsrolleneinheit um die Schwenkachse schwenkt, wenn die Kassette, wie vorstehend beschrieben, in die Antriebsvorrichtung eingelegt wird.

34. Bandantriebsvorrichtung nach einem der vorhergehenden Ansprüche, in der mit einer Einrichtung zur Ermittlung einer Referenzposition des Magnetkopfes, welche einen Schalter (110) aufweist, der durch die Rahmenanordnung (12) in seiner Lage gehalten wird und in Ausrichtung mit einem Teil der Kopfpositioniereinheit (20) angeordnet ist, um von dieser an einem bestimmten Endpunkt der Position des Magnetkopfes betätigt zu werden, wobei der Schalter bei einer solchen Betätigung ein Signal erzeugt, um die Anwesenheit des Magnetkopfes an dem Endpunkt anzuzeigen.

## Revendications

1. Mécanisme d'entraînement de bande (10) utilisable pour le stockage de données numériques, le mécanisme d'entraînement comprenant une structure de châssis de support (12) ayant une hauteur qui est sensiblement inférieure à sa longueur ou à sa largeur, le mécanisme d'entraînement de bande (10) ayant des parties avant et arrière et une ouverture d'admission de cassette de bande (44) à l'avant de celui-ci ; un moteur d'entraînement de bande (14) ayant une configuration globalement plate disposé en relation globalement coplanaire avec la structure de châssis (12) et monté sur une partie de celle-ci disposée globalement à l'arrière du mécanisme d'entraînement, le moteur d'entraînement (14) ayant un arbre de sortie rotatif s'étendant globalement perpendiculairement à la longueur et à la largeur de la structure de châssis ; un cabestan d'entraînement de bande (16) situé à l'avant du mécanisme d'entraînement par rapport au moteur et ayant des parties d'entraînement de bande disposées en alignement avec l'ouverture d'admission de cassette de bande (44) pour venir en prise de façon fonctionnelle avec une cassette de bande (30) quand on l'insère dans celle-ci et par conséquent effectuer le transport d'une bande (38) dans une telle cassette ; des moyens (18) couplant de façon flexible le cabestan (16) à l'arbre de sortie de moteur de façon à pouvoir tourner ; et un ensemble positionneur de tête (20) supporté sur la structure de châssis (12) et ayant des moyens (82) pour monter une tête de transducteur pour un mouvement réciproque le long d'un axe s'étendant globalement parallèlement à la hauteur du mécanisme d'entraînement et perpendiculaire à sa longueur et à sa largeur, le mécanisme d'entraînement de bande (10) étant caractérisé en ce que ledit ensemble positionneur de tête (20) comprend en outre un moteur de positionneur (74) ayant un arbre de sortie (84) s'étendant globalement dans le sens de la longueur du mécanisme d'entraînement et parallèle à la structure de châssis (12), le moteur de positionneur (74) ayant un diamètre qui est inférieur à la hauteur totale du mécanisme d'entraînement (10).

2. Mécanisme d'entraînement de bande selon la revendication 1, dans lequel l'ensemble positionneur de tête (20) comprend un dispositif de transmission d'entraînement rotatif couplé entre l'arbre de sortie du moteur de positionneur (84) et les moyens (82) pour monter une tête de transducteur.

3. Mécanisme d'entraînement de bande selon la revendication 2, dans lequel le dispositif de transmission d'entraînement comprend des moyens pour transmettre un mouvement rotatif le long d'un trajet s'étendant angulairement.

4. Mécanisme d'entraînement de bande selon la revendication 3, dans lequel les moyens pour transmettre le mouvement rotatif comprennent au moins un élément d'engrenage (90).

5. Mécanisme d'entraînement de bande selon la revendication 3, dans lequel les moyens pour transmettre le mouvement rotatif comprennent au moins un élément rotatif ayant une partie filetée (86).

6. Mécanisme d'entraînement de bande selon la revendication 3, dans lequel les moyens pour transmettre le mouvement rotatif comprennent au moins un élément d'engrenage (90) et au moins un élément rotatif (86) couplé à l'élément d'engrenage et ayant une partie filetée pour transmettre le mouvement rotatif.

7. Mécanisme d'entraînement de bande selon la revendication 3, dans lequel les moyens pour transmettre le mouvement rotatif comprennent au moins un ensemble d'engrenage à vis sans fin (86, 90).

8. Mécanisme d'entraînement de bande selon l'une quelconque des revendications précédentes, comprenant une carte de circuit (26) s'étendant dans le sens de la longueur et dans le sens de la largeur de la structure de châssis (12) et fixée à celle-ci selon une disposition globalement parallèle avec celle-ci, de façon à ce que l'épaisseur de la carte de circuit et la hauteur de la structure de châssis définissent ensemble la hauteur du mécanisme d'entraînement (10).

9. Mécanisme d'entraînement de bande selon l'une quelconque des revendications précédentes, comprenant des moyens pour charger une cassette de bande plane globalement plate (30) dans une position de fonctionnement prédéterminée après l'insertion initiale de celle-ci par l'ouverture d'admission (44) dans une direction globalement parallèle au plan de la cassette, les moyens de chargement comprenant un élément mobile disposé de façon adjacente à un côté d'une cassette ainsi insérée et monté pour se rapprocher et s'éloigner du côté de cassette le long d'un trajet de déplacement se trouvant à l'intérieur du plan de cassette.

10. Mécanisme d'entraînement de bande selon la revendication 9, dans lequel l'élément mobile est monté de façon à pivoter autour d'un axe de pivot qui s'étend globalement perpendiculairement au plan de cassette.

11. Mécanisme d'entraînement de bande selon la revendication 10, dans lequel la structure de châssis (12) a des parties qui s'étendent vers l'avant du moteur d'entraînement de bande (14) et en direction de l'ouverture d'admission de cassette de bande (44) le long d'un côté du mécanisme d'entraînement, les parties saillantes de structure de châssis supportant l'élément mobile monté en pivotement.

12. Mécanisme d'entraînement de bande selon la revendication 11, dans lequel les parties saillantes de structure de châssis supportent une paire des éléments mobiles, et chacun de ces éléments est disposé le long d'un côté opposé de la cassette (30) pour se déplacer globalement l'un vers l'autre.

13. Mécanisme d'entraînement de bande selon la revendication 9, dans lequel les moyens pour charger une cassette comprennent une paire des éléments mobiles, chacun de ces éléments étant disposé le long d'un côté opposé de la cassette (30) pour se déplacer globalement l'un vers l'autre.

14. Mécanisme d'entraînement de bande selon la revendication 9, dans lequel les moyens pour charger une cassette comprennent des moyens d'inclinaison élastiques (53) pour pousser la cassette (30) en direction de la position de fonctionnement.

15. Mécanisme d'entraînement de bande selon la revendication 14, dans lequel les moyens d'inclinaison élastiques (53) agissent de façon à pousser la cassette le long d'une paire de trajets différents, un trajet se trouvant globalement à l'intérieur du plan de cassette et l'autre étant orienté selon un certain angle par rapport au plan.

16. Mécanisme d'entraînement de bande selon la revendication 14 ou la revendication 15, dans lequel les moyens d'inclinaison élastiques (53) agissent sur l'élément mobile pour le pousser contre le côté de la cassette (30).

17. Mécanisme d'entraînement de bande selon l'une quelconque des revendications 14 à 16, dans lequel les moyens d'inclinaison élastiques (53) ont une action double et sont disposés de façon à pousser la cassette (30) dans des directions de chargement et d'éjection mutuellement opposées le long du trajet de chargement de cassette quand la cassette (30) est située en des points différents le long de celui-ci.

18. Mécanisme d'entraînement de bande selon la revendication 17, dans lequel les moyens d'inclinaison élastiques comprennent un ressort allongé (53) ayant un axe longitudinal qui se déplace de façon brusque par rapport à l'axe de pivot au cours de l'insertion et de l'éjection de la cassette (30).

19. Mécanisme d'entraînement de bande selon l'une quelconque des revendications précédentes, dans lequel le moteur d'entraînement de bande (14) a un corps principal dont la largeur est sensiblement plus grande que l'épaisseur, à l'exception de son arbre de sortie, et dans lequel la largeur du moteur atteint pratiquement 50 % ou plus de la largeur totale du mécanisme d'entraînement (10).

20. Mécanisme d'entraînement de bande selon l'une quelconque des revendications précédentes, dans lequel le moteur d'entraînement de bande (14) a un corps principal dont la largeur est sensiblement plus grande que l'épaisseur, et dans lequel l'épaisseur du corps de moteur atteint pratiquement 50 % de la hauteur totale du mécanisme d'entraînement (10).

21. Mécanisme d'entraînement de bande selon l'une quelconque des revendications précédentes, ayant une longueur, une largeur et une hauteur sensiblement de 14,0 cm (55 pouces), 10,2 cm (4,0 pouces) et 2,5 cm (1,0 pouce).

22. Mécanisme d'entraînement de bande selon l'une quelconque des revendications précédentes, dans lequel l'ensemble positionneur de tête (20) comprend un engrenage (90) mis en rotation par l'arbre de sortie de moteur (84) et des moyens de translation de force entraînés par l'engrenage et couplés à une tête de bande pour déplacer celle-ci en va-et-vient entre une pluralité de positions s'étendant sur la largeur de la bande .

23. Mécanisme d'entraînement de bande selon la revendication 22, comprenant une vis sans fin (86) disposée coaxialement sur l'arbre de sortie de moteur (84) et venant en prise avec l'engrenage (90) pour le faire tourner.

24. Mécanisme d'entraînement de bande selon la revendication 23, dans lequel l'engrenage est disposé en relation globalement coplanaire avec une cassette (30) insérée à l'intérieur du mécanisme d'entraînement (10) pour son fonctionnement.

25. Mécanisme d'entraînement de bande selon l'une quelconque des revendications 22 à 24, dans lequel les moyens de translation de force comprennent une vis mère et un mécanisme suiveur.

26. Mécanisme d'entraînement de bande selon la revendication 25, dans lequel le mécanisme suiveur est directement couplé à un élément support (82) sur lequel est montée la tête de bande .

27. Mécanisme d'entraînement de bande selon la revendication 26, dans lequel le mécanisme suiveur comprend une partie en une seule pièce de l'élément support (82).

28. Mécanisme d'entraînement de bande selon l'une quelconque des revendications 25 et 26, dans lequel la vis mère a un axe de rotation qui est globalement parallèle à celui de l'engrenage (90).

29. Mécanisme d'entraînement de bande selon la revendication 1, dans lequel le cabestan d'entraînement de bande (16) comprend un élément d'entraînement de bande rotatif adapté pour venir en prise avec une bande (38) se trouvant dans une cassette (30) insérée à l'intérieur du mécanisme d'entraînement (10) de façon à transporter la bande pour une opération d'enregistrement, et un arbre d'entraînement rotatif fixé de façon coaxiale à l'élément d'entraînement de bande rotatif pour le faire tourner, l'arbre d'entraînement ayant un axe de rotation disposé globalement parallèlement à l'axe de l'arbre de sortie du moteur d'entraînement de bande ; une courroie d'entraînement flexible (18) couplant d manière rotative l'arbre de sortie du moteur à l'arbre d'entraînement de cabestan ; et des moyens montant l'arbre d'entraînement pour un mouvement pivotant autour d'un axe s'étendant globalement perpendiculairement à l'axe de rotation de l'arbre d'entraînement et situé le long de l'arbre d'entraînement en un point espacé de l'élément d'entraînement de bande rotatif.

30. Mécanisme d'entraînement de bande selon la revendication 29, dans lequel la courroie d'entraînement (18) est disposée dans un plan qui croise l'arbre d'entraînement, et dans lequel l'axe de mouvement pivotant se trouve sensiblement à l'intérieur du plan.

31. Mécanisme d'entraînement de bande selon la revendication 30, dans lequel la courroie d'entraînement (18) est entraînée autour d'une poulie fixée à l'arbre d'entraînement, la poulie étant disposée globalement à l'intérieur dudit plan.

32. Mécanisme d'entraînement de bande selon la revendication 30, dans lequel la poulie est positionnée de façon à avoir un diamètre qui coïncide pratiquement avec l'axe de mouvement pivotant.

33. Mécanisme d'entraînement de bande selon la revendication 32, dans lequel l'élément d'entraînement de bande rotatif est situé, en cours d'utilisation, en relation globalement coplanaire avec une cassette (30) insérée à l'intérieur du mécanisme d'entraînement (10) pour son fonctionnement, quand la cassette est du type ayant un élément d'entraînement accessible pour conférer à la bande un mouvement de transport à l'intérieur de cette cassette, et l'élément d'entraînement de bande est disposé en alignement direct avec l'élément d'entraînement de cassette pour former avec celui-ci un contact de transmission d'entraînement lors de l'insertion complète de la cassette à l'intérieur du mécanisme d'entraînement pour son fonctionnement, et dans lequel l'élément d'entraînement de cassette porte contre l'élément d'entraînement de bande et fait pivoter l'arbre d'entraînement d'ensemble de cabestan autour de l'axe de pivot quand la cassette a été insérée à l'intérieur du mécanisme d'entraînement, comme décrit ci-dessus.

34. Mécanisme d'entraînement de bande selon l'une quelconque des revendications précédentes, comprenant des moyens pour établir la position de la tête de transducteur, comprenant un commutateur (110) maintenu en position par la structure de châssis (12) et disposé en alignement avec une partie de l'ensemble positionneur de tête (20) pour être actionné à une extrémité prédéterminée des positions de transducteur, le commutateur produisant un signal lors de cet actionnement pour indiquer la présence du transducteur à ladite extrémité.
